# EUROPEAN PATENT SPECIFICATION

(11) **EP 3 438 654 B1**
(45) Date of publication and mention of the grant of the patent: **14.09.2022**
(21) Application number: 18185604.8
(22) Date of filing: 25.07.2018
(51) Int. Cl.: G01N 27/447, B01L 3/00

(54) **ANALYSIS CHIP**
ANALYSECHIP
PUCE D'ANALYSE

(30) Priority: 03.08.2017 JP 2017150736
(43) Date of publication of application: 06.02.2019
(73) Proprietor: ARKRAY, Inc., Kyoto-shi, Kyoto 601-8045 (JP)
(72) Inventor: ONUMA, Naotsugu, Kyoto 602-0008 (JP)
(74) Representative: Dehns

(56) References cited:
- WO-A2-2005/114223
- WO-A2-2008/051310
- US-B2- 9 228 977

## Description

### Technical Field

The present invention relates to an analysis chip that may include a microchip employed for capillary electrophoresis.

### Related Art

Conventionally, specimen analysis techniques have been performed by capillary electrophoresis. In recent years, microchip electrophoresis, which employs capillaries adapted for chip devices, has been performed, in order to miniaturize and to simplify such devices. In microchip electrophoresis, capillaries used for electrophoresis and reservoir wells for various types of solutions are formed on a single chip.

An example of such a microchip is described in JP 1999-337521 A. In this microchip, capillaries are formed in a cross shape. Another microchip is described in WO 2008/136465 A1, the microchip disclosed therein comprising only a single capillary and solution reservoir wells at both ends of the capillary. Further, a microchip provided with film-shaped electrodes is described in JP 4178653 B.

Furthermore, JP 2016-212090 A discloses a chip unit (an analysis instrument) comprising a microchip (a first unit) and a cartridge (a second unit). According to the disclosure, the chip unit is completed by coupling the microchip and the cartridge together, whereby a specific liquid contained in the cartridge is moved to the chip.

In the aforementioned JP 2016-212090 A, while the microchip and the cartridge are coupled together along a vertical height direction with respect to a flow path, there is no particular mention of the method of fixing the cartridge and the chip together. Some sort of fixing method is needed with this chip unit since external force will be applied to the chip unit when the chip unit is introduced into a measurement device, when the position of the chip unit in the measurement device is aligned after being introduced, or when an electrode for capillary electrophoresis is connected to the chip unit.

Analysis chips suitable for being employed in the analysis of a sample are disclosed in US 9 228 977 B2, WO 2005/114223 A2 and WO 2008/051310 A2. Such analysis chips comprises a first unit that comprises a sample introduction portion and a second unit comprising an insertion port into which the first unit can be inserted.

### SUMMARY

The present invention relates to an analysis chip according to claim 1 and dependent claims 2-4.

According to a first aspect, the present invention provides an analysis chip that includes a microchip employed for capillary electrophoresis and a cartridge. The analysis chip is structured so as to enable the microchip and the cartridge to be reliably coupled together and such that the microchip is able to be reliably housed in the cartridge.

There is provided an analysis chip which can be employed to analyze a sample, and which comprises a first unit that comprises a sample introduction portion into which the sample is introduced, and a second unit that is configured to house the first unit. The second unit comprises an insertion port into which the first unit is inserted. The first unit is formed so as to be moveable from a first state in which the sample introduction portion is positioned outside the second unit relative to the insertion port, to a second state in which the sample introduction portion is positioned inside the second unit relative to the insertion port. The second unit comprises a guide portion that guides the first unit from the first state to the second state.

The first unit has two side edges running parallel to a direction of movement from the first state to the second state, and the guide portion is provided at a position along which both the side edges are slidable in the direction of movement.

In a preferred embodiment of the present invention, the second unit comprises a position restriction portion that holds the first unit in the second state.

In embodiments of the present invention, an analysis chip can be provided that includes a microchip employed for capillary electrophoresis (the "first unit") and a cartridge (the "second unit"). The analysis chip has a structure in which the microchip and the cartridge can be reliably coupled together, and the microchip can be reliably housed in the cartridge.

### BRIEF DESCRIPTION OF THE DRAWINGS

Exemplary embodiments will be described in detail based on the following figures, wherein:
Fig. 1A is a perspective view illustrating an analysis chip according to an exemplary embodiment of the present invention in a first state, and Fig. 1B illustrates the analysis chip in a second state;
Fig. 2 is a bottom view illustrating an analysis chip according to an exemplary embodiment of the present invention; and
Fig. 3A is a cross-section taken along IIIA-IIIA in Fig. 1A, and Fig. 3B is a cross-section taken along IIIB-IIIB in Fig. 1B.

### DETAILED DESCRIPTION

Explanation follows regarding a preferred embodiment of the present invention, with reference to the drawings. Note that the following description and the drawings merely show an exemplary embodiment of the present invention, and the present invention is not limited thereto.

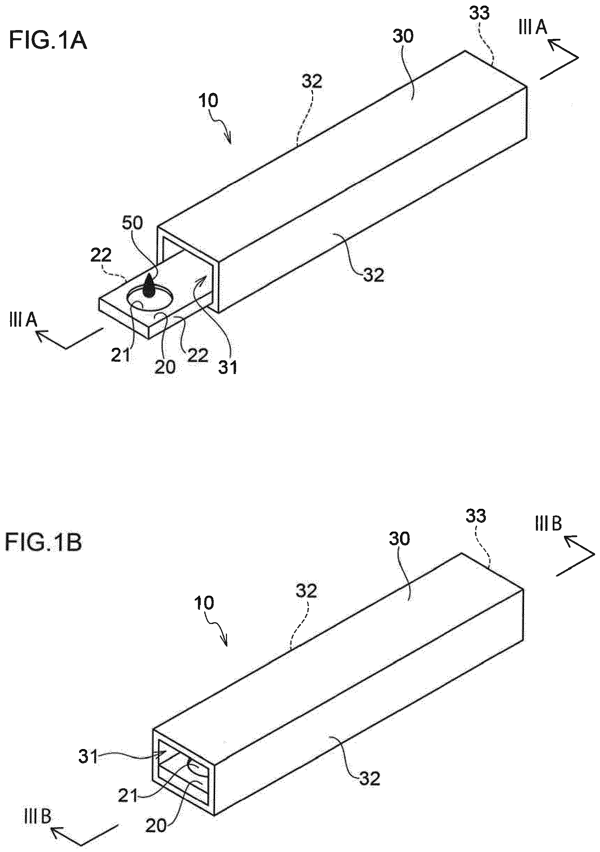

Fig. 1A and Fig. 1B, Fig. 2, and Fig. 3A and Fig. 3B illustrate an analysis chip 10 according to an exemplary embodiment of the present invention. The analysis chip 10 of the present exemplary embodiment comprises a microchip as a first unit 20 and a cartridge as a second unit 30.

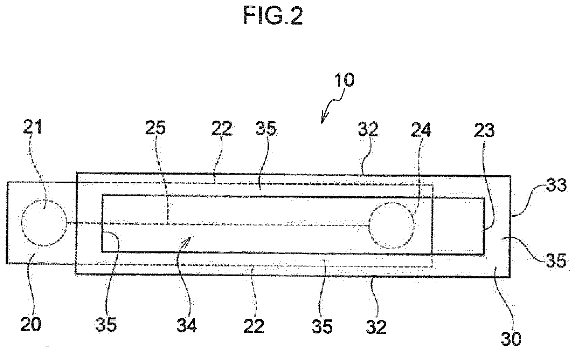

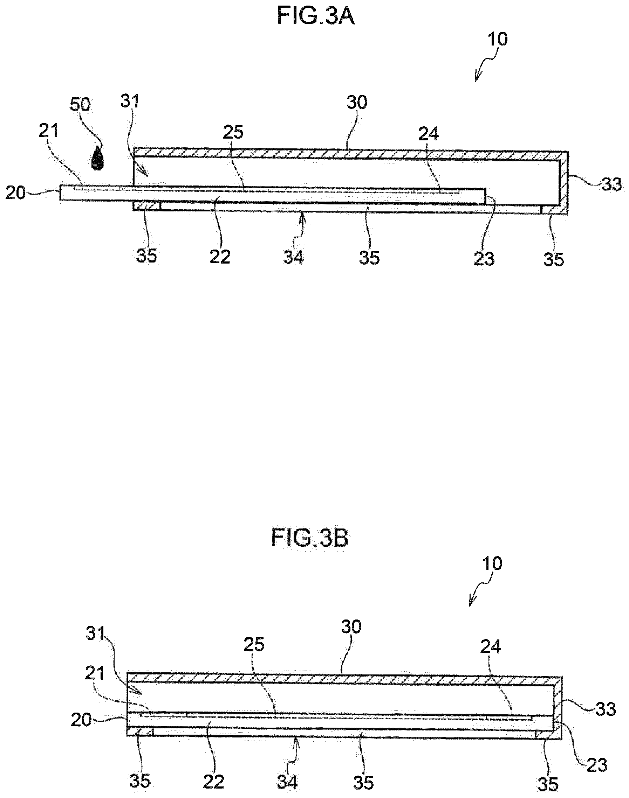

Fig. 1A is a perspective view illustrating the analysis chip 10 in a first state in which the first unit 20 projects out from the second unit 30. Fig. 1B is a perspective view illustrating the analysis chip 10 in a second state in which the first unit 20 is contained within the second unit 30. Fig. 2 is a bottom view of the analysis chip 10. Fig. 3A illustrates the analysis chip 10 in the first state in which the first unit 20 projects out from the second unit 30, as seen in a cross-section taken along IIIA-IIIA in Fig. 1A. Fig. 3B illustrates the analysis chip 10 in the second state in which the first unit 20 is contained within the second unit 30, as seen in a cross-section taken along IIIB-IIIB in Fig. 1B.

The first unit 20 is formed as a plate-shaped microchip that has a substantially rectangular shape (see Fig. 2). A recessed portion that serves as a sample introduction portion 21 is provided at an upper face of the first unit 20. A liquid sample 50 is introduced into the sample introduction portion 21 (see Fig. 1A and Fig. 3A). Moreover, the width of the first unit 20 is set such that that two side edges 22 of the first unit 20 are capable of sliding along the inner walls of the second unit 30. Further, both the side edges 22 run parallel to the direction along which the first unit 20 moves from the first state illustrated in Fig. 1A to the second state illustrated in Fig. 1B. Further, the edge of the first unit 20 at an opposite side from the side at which the sample introduction portion 21 is provided provides an abutting edge 23 (see Fig. 2, Fig. 3A, and Fig. 3B). At some locations of the first unit 20, various structures necessary for carrying out measurements are also provided, such as a discharge portion 24 to which the sample 50 is discharged, a flow path 25 serving as a capillary at which an introduced sample 50 is subject to electrophoresis from the sample introduction portion 21 to the discharge portion 24, a reaction section at which a reaction of the sample 50 with a given chemical reagent occurs at a particular position along the channel, and a detection section at which a measurement light is irradiated. The reaction section and detection section are omitted from the drawings.

A wide variety of specimens may be employed as the sample 50. Examples thereof include specimens of biological origin such as blood, urine, or sweat, and samples that are the subject of environmental surveys, such as those from a water survey or a geological survey. If the specimen is liquid, it may be employed as the sample 50 as is, or after being appropriately diluted or concentrated. Further, in cases in which the specimen is solid, or a highly viscous liquid or a gel, the specimen can be employed as the sample 50 only after the specimen is dissolved or dispersed in a suitable solvent so as to be in a liquid state.

The second unit 30 is formed in a substantially cuboidal box shape that has its length direction aligned with the length direction of the first unit 20. The bottom face of the second unit 30 comprises a measurement port 34 that is an opening, for example a rectangular-shaped opening. An edge portion of the bottom face of the second unit 30 that surrounds the measurement port 34 provides a support edge 35 (see Fig. 2).

One of the end faces of the second unit 30 opens so as to provide an insertion port 31 (see Fig. 1A, Fig. 1B, Fig. 3A, and Fig. 3B), through which the first unit 20 is inserted into the second unit 30. Moreover, the other end face of the second unit 30 is closed so as to provide a position restriction portion 33 (see Fig. 2, Fig. 3A, and Fig. 3B). In the second state, the abutting edge 23 of the first unit 20 contacts an inner side of the position restriction portion 33 (see Fig. 3B). Further, two side faces of the second unit 30 serve as guide portions 32. The inner sides of the guide portions 32 contact the respective side edges 22 of the first unit 20 (see Fig. 2).

Explanation follows regarding functions of the present exemplary embodiment.

In the first state illustrated in Fig. 1A and Fig. 3A, the sample introduction portion 21 of the first unit 20 is positioned outside the second unit 30 relative to the open insertion port 31 of the second unit 30. In other words, at least a portion of the first unit 20 at which the sample introduction portion 21 is located is positioned so as to project out from the insertion port 31 of the second unit 30. In this state, a liquid sample 50 is introduced into the sample introduction portion 21 by being dropped thereon or directly contacted thereto.

When the first unit 20 is pressed into the second unit 30 from the first state, the first unit 20 moves into the second unit 30 as both the side edges 22 of the first unit 20 slide along the guide portions 32 of the second unit 30. Then, the second state illustrated in Fig. 1B and Fig. 3B is achieved when the abutting edge 23 of the first unit 20 abuts the position restriction portion 33 of the second unit 30. Namely, in the second state, the sample introduction portion 21 of the first unit 20 is positioned inside the second unit 30 relative to the insertion port 31 of the second unit 30.

Namely, the guide portions 32 of the second unit 30 are provided at positions along which both the side edges 22 of the first unit 20 are slidable, thus guiding the direction of movement between the first state and the second state. In other words, the guide portions 32 of the second unit 30 guide the first unit 20 from the first state to the second state. Further, the position restriction portion 33 of the second unit 30 limits further movement of the first unit 20, thereby holding the first unit 20 in the second state.

Further, throughout the movement from the first state to the second state shown above, the first unit 20 is supported in a state mounted on the support edge 35 of the bottom face of the second unit 30.

Then, in the second state, the analysis chip 10 is set in an analysis instrument (not illustrated) and predetermined measurements are performed. At this time, a predetermined operation, such as radiation of measurement light or the like, is performed through the measurement port 34 in the bottom face of the second unit 30.

The analysis chip 10 is preferably formed as a disposable unit in which all of, or almost all of, both of the first unit 20 as a microchip and the second unit 30 as a cartridge housing the first unit 30 is molded from a synthetic resin.

Moreover, in another exemplary embodiment, a structure may be provided for keeping the analysis chip 10 in the second state. For example, the first unit 20 may comprise a member to close the insertion port 31 during the second state. Further, structures that mutually engage in the second state may be provided between both the side edges 22 of the first unit 20 and the guide portions 32 of the second unit 30 (for example, recesses on both the side edges 22 and projections on the guide portions 32).

### Industrial Applicability

The present invention may be employed for an analysis chip that includes a microchip employed for capillary electrophoresis.

## Claims

1. An analysis chip (10) for setting into an analysis instrument for being employed in the analysis of a sample (50), the analysis chip (10) comprising:
a first unit (20) that comprises a sample introduction portion (21) into which the sample (50) can be introduced; and
a second unit (30) that is configured to house the first unit (20),
the second unit (30) being formed in a cuboidal box shape that has a length direction aligned with a length direction of the first unit (20), wherein an end face of the second unit (30) opens so as to provide an insertion port (31), through which the first unit (20) can be inserted into the second unit (30),
the first unit (20) being formed so as to be moveable from a first state in which the sample introduction portion (21) is positioned outside the second unit (30), to a second state in which the sample introduction portion (21) is positioned inside the second unit (30), and
the second unit (30) comprising two side faces which serve as guide portions (32), the inner sides of the guide portions (32) being configured to contact the respective side edges (22) of the first unit (20) for guiding the first unit (20) from the first state to the second state, the analysis chip being **characterized in that**
a bottom face of the second unit (30) comprises a measurement port (34) that is an opening, wherein an edge portion of the bottom face of the second unit (30) that surrounds the measurement port (34) provides a support edge (35) onto which the first unit (20) can be mounted, and **in that**, in the second state, a predetermined operation, such as radiation of measurement light or the like, can be performed through the measurement port (34) in the bottom face of the second unit (30).

2. The analysis chip of claim 1, wherein the second unit (30) comprises a position restriction portion (33) for holding the first unit (20) in the second state.

3. The analysis chip of any preceding claim, wherein the first unit (20) is a microchip to be employed for capillary electrophoresis and the second unit (30) is a cartridge configured to house the microchip (20).

4. The analysis chip of claim 3, wherein the microchip (20) comprises a sample introduction portion (21) into which the sample (50) can be introduced, a discharge portion (24) to which the sample (50) can be discharged, and a flow path (25) serving as a capillary within which the sample (50) can be subject to electrophoresis from the sample introduction portion (21) to the discharge portion (24).

## Patentansprüche

1. Analysechip (10) zum Einsetzen in ein Analysegerät, um bei der Analyse einer Probe (50) genutzt zu werden, wobei der Analysechip (10) umfasst:
eine erste Einheit (20), die einen Probeneinführungsabschnitt (21) umfasst, in den die Probe (50) eingeführt werden kann; und
eine zweite Einheit (30), die konfiguriert ist, um die erste Einheit (20) aufzunehmen,
wobei die zweite Einheit (30) in einer quaderförmigen Kistengestalt gebildet ist, die eine mit einer Längsrichtung der ersten Einheit (20) ausgerichtete Längsrichtung aufweist, wobei eine Endfläche der zweiten Einheit (30) sich öffnet, um einen Einfügungsanschluss (31) bereitzustellen, durch den die erste Einheit (20) in die zweite Einheit (30) eingefügt werden kann,
wobei die erste Einheit (20) gebildet ist, um aus einem ersten Zustand, in dem der Probeneinführungsabschnitt (21) außerhalb der zweiten Einheit (30) positioniert ist, zu einem zweiten Zustand, in dem der Probeneinführungsabschnitt (21) innerhalb der zweiten Einheit (30) positioniert ist, beweglich zu sein, und
wobei die zweite Einheit (30) zwei Seitenflächen umfasst, die als Führungsabschnitte (32) dienen, die Innenseiten der Führungsabschnitte (32) konfiguriert sind, um die jeweiligen Seitenränder (22) der ersten Einheit (20) zum Führen der ersten Einheit (20) aus dem ersten Zustand in den zweiten Zustand zu berühren, wobei der Analysechip **dadurch gekennzeichnet ist, dass**
eine Bodenfläche der zweiten Einheit (30) einen Messanschluss (34) umfasst, der eine Öffnung ist, wobei ein Randabschnitt der Bodenfläche der zweiten Einheit (30), der den Messanschluss (34) umgibt, einen Trägerrand (35) bereitstellt, auf den die erste Einheit (20) montiert werden kann, und dadurch, dass in dem zweiten Zustand ein vorher festgelegter Vorgang, wie eine Bestrahlung von Messlicht oder dergleichen, durch den Messanschluss (34) in der Bodenfläche der zweiten Einheit (30) durchgeführt werden kann.

2. Analysechip nach Anspruch 1, wobei die zweite Einheit (30) einen Positionsbeschränkungsabschnitt (33) zum Halten der ersten Einheit (20) in dem zweiten Zustand umfasst.

3. Analysechip nach einem vorstehenden Anspruch, wobei die erste Einheit (20) ein zur Kapillarelektrophorese zu nutzender Mikrochip ist und die zweite Einheit (30) eine Kartusche ist, konfiguriert, um den Mikrochip (20) aufzunehmen.

4. Analysechip nach Anspruch 3, wobei der Mikrochip (20) einen Probeneinführungsabschnitt (21), in den die Probe (50) eingeführt werden kann, einen Ausstoßabschnitt (24), zu dem die Probe (50) ausgestoßen werden kann, und einen Strömungspfad (25) von dem Probeneinführungsabschnitt (21) zu dem Ausstoßabschnitt (24) umfasst, der als eine Kapillare dient, in dem die Probe (50) Elektrophorese unterzogen werden kann.

## Revendications

1. Puce d'analyse (10) destinée à être installée dans un instrument d'analyse pour être utilisée dans l'analyse d'un échantillon (50), la puce d'analyse (10) comprenant :
une première unité (20) qui comprend une partie d'introduction d'échantillon (21) dans laquelle l'échantillon (50) peut être introduit ; et
une seconde unité (30) qui est configurée pour loger la première unité (20),
la seconde unité (30) étant formée sous une forme de boîte cubique qui présente une direction de longueur alignée avec une direction de longueur de la première unité (20), dans laquelle une face d'extrémité de la seconde unité (30) s'ouvre de manière à fournir un orifice d'insertion (31), à travers lequel la première unité (20) peut être insérée dans la seconde unité (30),
la première unité (20) étant formée de manière à pouvoir se déplacer depuis un premier état dans lequel la partie d'introduction d'échantillon (21) est positionnée à l'extérieur de la seconde unité (30), vers un second état dans lequel la partie d'introduction d'échantillon (21) est positionnée à l'intérieur de la seconde unité (30), et
la seconde unité (30) comprenant deux faces latérales qui servent de parties de guidage (32), les côtés internes des parties de guidage (32) étant configurés pour entrer en contact avec les bords latéraux (22) respectifs de la première unité (20) pour guider la première unité (20) depuis le premier état vers le second état, la puce d'analyse étant **caractérisée en ce que**
une face inférieure de la seconde unité (30) comprend un orifice de mesure (34) qui est une ouverture, dans laquelle une partie de bord de la face inférieure de la seconde unité (30) qui entoure l'orifice de mesure (34) fournit un bord de support (35) sur lequel la première unité (20) peut être montée, et **en ce que**, dans le second état, une opération prédéterminée, telle que le rayonnement d'une lumière de mesure ou similaire, peut être effectuée à travers l'orifice de mesure (34) dans la face inférieure de la seconde unité (30).

2. Puce d'analyse selon la revendication 1, dans laquelle la seconde unité (30) comprend une partie de restriction de position (33) pour maintenir la première unité (20) dans le second état.

3. Puce d'analyse selon une quelconque revendication précédente, dans laquelle la première unité (20) est une micropuce à utiliser pour une électrophorèse capillaire et la seconde unité (30) est une cartouche configurée pour loger la micropuce (20).

4. Puce d'analyse selon la revendication 3, dans laquelle la micropuce (20) comprend une partie d'introduction d'échantillon (21) dans laquelle l'échantillon (50) peut être introduit, une partie d'évacuation (24) vers laquelle l'échantillon (50) peut être évacué, et un trajet d'écoulement (25) servant de capillaire à l'intérieur duquel l'échantillon (50) peut être soumis à une électrophorèse depuis la partie d'introduction d'échantillon (21) vers la partie d'évacuation (24).
